# EUROPÄISCHE PATENTANMELDUNG

(11) **EP 1 491 279 A1**
(43) Veröffentlichungstag der Anmeldung: **29.12.2004**
(21) Anmeldenummer: 04010037.2
(22) Anmeldetag: 28.04.2004
(51) Int. Cl.: B23K 26/06

(54) **Multifokales Schweissverfahren und Schweisseinrichtung**

(30) Priorität: 27.06.2003 DE 10329075
(71) Anmelder: Schuler Held Lasertechnik GmbH & Co. KG, 63128 Dietzenbach (DE)
(72) Erfinder: Gossen, Rainer, 63500 Seligenstadt (DE); Wegener, Konrad, Dr., 70333 Göppingen (DE)
(74) Vertreter: Patentanwälte Rüger, Barthelt & Abel

(57) **Zusammenfassung**

Bei einem Laserschweißverfahren wird mit einem Schweißkopf gearbeitet, der wenigstens zwei unterschiedliche Fokusse (11, 12) erzeugt. Die Fokusse liegen vorzugsweise beide auf der optischen Achse in unterschiedlichen Tiefen der Schweißnaht. Außerdem sind die Konvergenzwinkel vorzugsweise unterschiedlich. Es lassen sich V-förmige Nähte auch bei dicken Werkstücken mit guter Nahtqualität erzielen.

## Beschreibung

Die Erfindung betrifft ein Schweißverfahren und eine Schweißeinrichtung, insbesondere zum Herstellen von Schweißnähten an metallischen Werkstoffen.

Laserschweißeinrichtungen sind bekannt. Mit dem Laser lassen sich auf kleinstem Raum sehr hohe Leistungsdichten erzeugen. Es wird in der Regel ein so genannter Tiefschweißeffekt ausgenutzt, bei dem sich in Metallwerkstoffen unterhalb des Brennflecks eine Dampfkapillare ausbildet, die sehr schlank ist und bis zu ca. 40 mm tief in das Material eindringt. Durch die Dampfkapillare wird die Lichtleistung in das umgebende Material eingekoppelt, so dass dieses aufgeschmolzen wird. Im Ergebnis entsteht eine umgeschmolzene Zone, die sehr schlank und tief ist. Infolge der Relativbewegung des Brennflecks zu dem Werkstück auf einer Bahn parallel zur Materialoberfläche und entlang einer zu verschweißenden Trennlinie entsteht eine sehr schmale Naht. Hier ergibt sich eine schnelle schockartige Auskühlung des Schweißbads und es ergeben sich steile Temperaturgradienten. Dies kann bei einigen Materialien zu Heißrissen und Porenbildung führen.

Davon ausgehend ist es Aufgabe der Erfindung, ein Schweißverfahren sowie eine Schweißeinrichtung anzugeben, die auch bei schwierigen Schweißverhältnissen zu einer erhöhten Nahtqualität führen können.

Diese Aufgabe wird mit dem Verfahren nach Anspruch 1 sowie mit der Schweißeinrichtung nach Anspruch 16 gelöst.

Das erfindungsgemäße Schweißverfahren beinhaltet, dass zum Schweißen des Materials (Metall oder auch ein anderes schweißbares Material) zwei oder mehrere Fokusse vorgesehen sind, bei denen ein oder mehrere Lichtbündel von der gleichen Seite des Schweißguts her auf die gleiche Schweißzone zur gemeinsamen Erzeugung einer Schweißnaht einwirken. Die Lichtbündel sind dabei aus der gleichen Richtung kommend auf verschiedene Tiefen des Schweißbads gerichtet. Beide Lichtbündel können mit senkrechter Inzidenz zu der Schweißnaht geführt werden, was optimale Einkoppelbedingungen ermöglicht. Außerdem ist es möglich, die Nahtausbildung so zu steuern, dass sie immer genau die Schnittkanten der zu verbindenden Werkstücke trifft. Durch die Nutzung zweier Fokusse mit unterschiedlicher Tiefenlage wird es nicht nur möglich, mehr Lichtleistung in den Bereich der Schweißnaht einzukoppeln und damit ein größeres Schmelzbadvolumen zu erzeugen sondern es wird auch möglich, die Form des aufgeschmolzenen Bereichs gezielt zu beeinflussen. Die Vergrößerung des aufgeschmolzenen Volumens kann zu einer Verminderung der Temperaturgradienten zu beiden Seiten der Schmelzzone und somit zur Verminderung der Heißrissneigung führen. Außerdem ist es möglich, der aufgeschmolzenen Zone (dem Schweißbad) die gewünschte V-Form zu geben, wodurch die Ausbildung geschlossener Erstarrungsfronten, die Ausgaszonen und Schrumpfungszonen umschließen, verhindert wird. Die Erstarrung kann somit vom Nahtboden ausgehend nach oben fortschreiten, was zu verminderter Porenbildung führt. Verunreinigungen und Einschlüsse werden zur Nahtoberfläche geführt. Durch die Beeinflussung des Abstands der Fokusse voneinander kann der Flankenwinkel der V-förmigen Naht wie gewünscht eingestellt werden. Dies ermöglicht aus das Schweißen von kritischen Materialien mit weniger guter Schweißbarkeit.

Vorzugsweise werden die übereinander liegenden Fokusse von einem Zentralstrahl und einem um diesen herumgelegten Ringstrahl gebildet, die von einer gemeinsamen Quelle oder von unterschiedlichen Lichtquellen herrühren können und die unterschiedliche Konvergenzen aufweisen. Die beiden Strahlen, d.h. der Zentralstrahl und der Ringstrahl, sind dabei vorzugsweise konzentrisch zueinander angeordnet, wobei sie eine gemeinsame optische Achse aufweisen. Dies ermöglicht die Ausbildung einer schlanken, V-förmigen Naht, insbesondere ohne Flaschenhals oder sonstige Formfehler.

Es ist sowohl möglich, die unterschiedlichen Lichtbündel mit gleicher oder unterschiedlicher Wellenlänge gleichzeitig als auch zeitlich versetzt oder abwechselnd aktiv werden zu lassen. Bei gleichzeitigem Betrieb können die Lichtbündel zeitlich konstante Leistung oder auch eine zeitlich modulierte, d.h. gezielt beeinflusste schwankende Leistung aufweisen. Damit ergeben sich zahlreiche Gestaltungsmöglichkeiten zur Beeinflussung der Nahtform, zur Anpassung an unterschiedliche Materialien, Materialdicken und Schweißbadformen. Unter "Licht" wird IR-Strahlung, sichtbares Licht und UV-Licht verstanden.

Die beiden Lichtbündel (Zentralstrahl und Ringstrahl) werden vorzugsweise durch eine gemeinsame Optik auf das Werkstück geleitet. Der Ringstrahl kann dabei in Einzelringsegmente aufgeteilt sein. Es ist auch möglich, anstelle eines geschlossenen Rings eine ringförmige Kette von Einzelstrahlen zu verwenden. Dabei wird eine Anordnung bevorzugt, bei der die Einzelstrahlen soweit ausbalanciert sind, dass die von dem erzeugten gemeinsamen Fokus ausgehende Dampfkapillare die gleiche Richtung hat wie die von dem anderen Fokus erzeugte Dampfkapillare, wobei sich beide Dampfkapillaren zu einer gemeinsamen Dampfkapillare vereinen. Mehrfachreflexionen wie sie vorkommen können wenn fokussierte Laserstrahlen aus unterschiedlicher Richtung auf ein gemeinsames Schweißbad treffen und die zu ungünstiger Schmelzbadform und zu ungünstigen Einkoppelbedingungen führen, können somit vermieden werden.

Es ist möglich, wenigstens einen der beiden Fokusse in Bezug auf den jeweils anderen dauernd oder temporär zu bewegen, beispielsweise um größere Materialbereiche zu erfassen. Dies kann durch Bewegung optischer Elemente, wie Spiegel oder Linsen, oder gegebenenfalls auch mit einem wahlfrei ansteuerbaren optischen Multispiegelelement erfolgen. Mit wahlfrei ansteuerbaren optischen Multispiegelelementen lassen sich auch zwei oder mehrere Fokusse aus einem einzigen Lichtstrahl herleiten. Auch lässt sich der Fokusabstand variieren.

Eine entsprechende Schweißmaschine (Schweißeinrichtung) weist ein oder mehrere Schweißköpfe auf, die dazu dienen mit zueinander konzentrischen Lichtstrahlen in unterschiedlicher Tiefe liegende Fokusse auszubilden. Dies bedeutet, dass beide Fokusse auf einer gemeinsamen, von dem Objektiv festgelegten optischen Achse anzutreffen sind. Bedarfsweise können hier auch mehrere Fokusse vorhanden sein oder es kann ein Linienfokus ausgebildet sein. Dies ermöglicht die Einkopplung von hohen Leistungen in große Materialtiefen. Die Laserleistung kann von einem einzigen Laser (beispielsweise einem 20 kW-Laser) hergeleitet sein. Es wird jedoch bevorzugt, zwei Laserquellen zu verwenden. Vorzugsweise sind diese gleich stark. Es können jedoch auch unterschiedlich starke Laserquellen kombiniert werden. Dabei ist vorzugsweise jeder Laserquelle ein Fokus zugeordnet. Das Schweißen von dünneren Materialen kann dann beispielsweise mit lediglich einer Laserquelle und einem Fokus durchgeführt werden, während das Schweißen von dickeren Materialien mit beiden Laserquellen und zwei Fokussen erfolgt. Damit lassen sich Laserschweißanlagen erzeugen, die ein besonders weites Anwendungsspektrum ermöglichen.

Die beiden Lichtstrahlen zur Erzeugung der beiden Fokusse können unterschiedliche Strahleigenschaften wie Leistungsdichte, Wellenlänge, Konvergenz usw. haben.

Weitere Einzelheiten vorteilhafter Ausführungsformen der Erfindung ergeben sich aus der Zeichnung, der Beschreibung oder aus Unteransprüchen.

In der Zeichnung sind Ausführungsbeispiele der Erfindung veranschaulicht. Es zeigen:
- Figur 1: eine Schweißeinrichtung beim Schweißen einer Naht in weitgehend schematisierter Darstellung,
- Figur 2: einen Ausschnitt aus dem Strahlengang der Schweißeinrichtung nach Figur 1 in einem anderen Maßstab,
- Figur 3: ein Werkstück beim Herstellen einer Laserschweißnaht mit einem ersten Verfahren in Draufsicht,
- Figur 4: den Strahlengang einer Optik mit zwei abwechselnd eingestellten Fokussen in schematischer Darstellung,
- Figur 5: eine abgewandelte Vorrichtung zum Herstellen einer Laserschweißnaht anhand einer schematischen Darstellung,
- Figur 6: eine Ausführungsform einer Optik zur Herstellung einer Schweißnaht mit mehreren Fokussen in schematisierter Darstellung und
- Figur 7: eine Ausführungsform einer Schweißeinrichtung mit linienhafter Fokuszone.

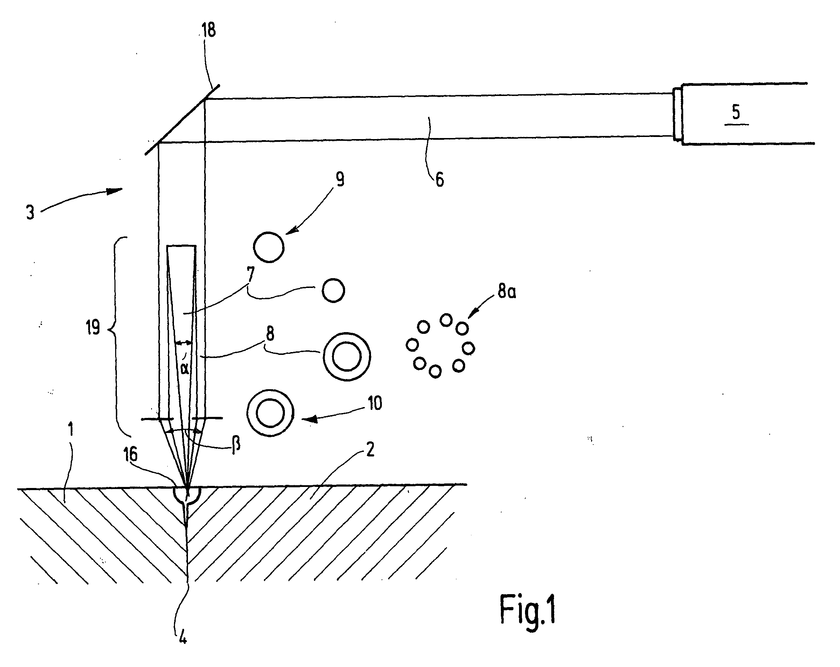

In Figur 1 sind zwei Werkstücke 1, 2 veranschaulicht, die mittels einer Laserschweißeinrichtung 3 an einer Trennfuge 4 miteinander zu verbinden sind. Die Laserschweißeinrichtung 3 weist wenigstens einen Laser 5 auf, dessen ausgehendes Lichtbündel 6 wenigstens in einem Teil des Lichtwegs auf zwei unterschiedliche Lichtwege 7, 8 aufgespalten wird. Die Lichtwege 7, 8 führen beide zu der Schweißnaht 4. Jedoch enthalten sie unterschiedliche optische Elemente, beispielsweise in Form zweier unterschiedlicher Linsen 9, 10, die rechts neben den Lichtwegen 7, 8 gesondert veranschaulicht sind. Beispielsweise handelt es sich bei der Linse 9 um eine scheibenförmige Linse, beispielsweise eine Zonenlinse und bei der Linse 10 um eine ringförmige Linse, beispielsweise ebenfalls eine Zonenlinse. Beide Linsen 9, 10 wirken als Sammellinsen, haben aber unterschiedliche Brennweiten. Sie sind bezüglich der Längsrichtung des Lichtwegs gegeneinander versetzt angeordnet und erfassen unterschiedliche Partien des Lichtbündels 6. Beispielsweise erfasst die Linse 10 eine äußere Ringzone, während die Linse 9 einen inneren Kernbereich des Lichtbündels 6 erfasst. Hinter der Linse 9 ist der Lichtstrahl 6 in einen Zentral strahl in dem Lichtweg 7 und einen Ringstrahl in dem Lichtweg 8 aufgeteilt. Der Ringstrahl 8 ist konzentrisch zu dem Zentralstrahl angeordnet.

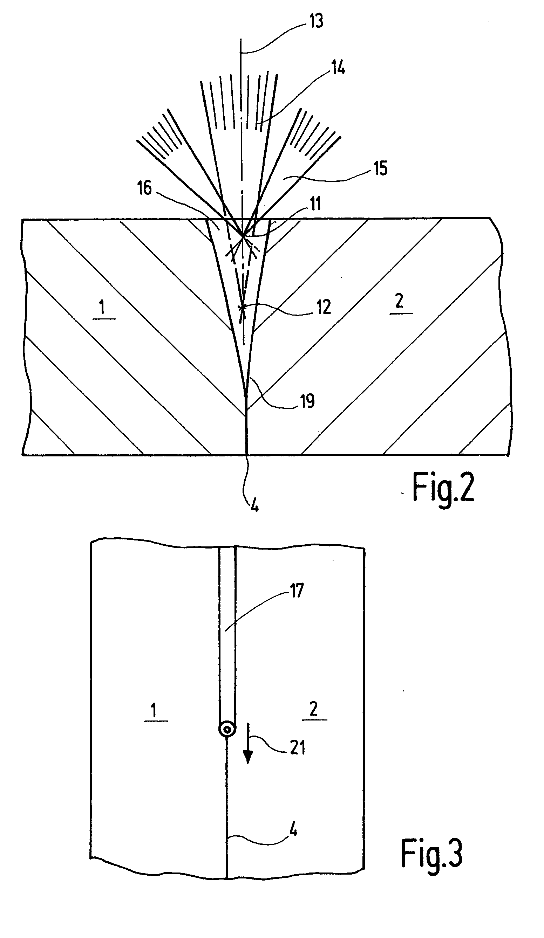

Das den Lichtweg 7 durchlaufende konvergente Lichtbündel kann einen wesentlich geringeren Konvergenzwinkel α aufweisen als der von der Linse 10 festgelegte Konvergenzwinkel β. Es entstehen somit gemäß Figur 2 unterschiedliche Fokusse 11, 12, die vorzugsweise auf einer gemeinsamen optischen Achse 13 in unterschiedlichen Tiefen angeordnet sind. In Draufsicht, gemäß Figur 3 wird ersichtlich, dass ein inneres Lichtbündel 14, das dem Lichtweg 7 zugeordnet ist, konzentrisch zu einem äußeren Lichtbündel 15 angeordnet ist, das dem Lichtweg 8 zugeordnet ist. Es entsteht dadurch ein sich zu seiner Oberfläche hin V-förmiges Schweißbad 16, das aus aufgeschmolzenem Material der Werkstücke 1 und 2 besteht.

Die insoweit beschriebene Laserschweißeinrichtung 3 arbeitet wie folgt:
Der Laser 5 läuft z.B. im Dauerbetrieb. Das Lichtbündel 6 (z.B. IR-Licht eines CO₂-Lasers) steht dann mit zeitlich konstanter Leistung an und wird über einen Spiegel 18 über ein Objektiv 19, zu dem zumindest die beiden Linsen 9, 10 gehören, auf die Trennfuge 4 zwischen den beiden Werkstücken 1, 2 gerichtet. Das Lichtbündel 14 erzeugt dabei einen Brennpunkt. Der Fokus 12 liegt unterhalb der Werkstückoberfläche, wobei sich bei geringem Konvergenzwinkel α eine Dampfkapillare ausbildet, mit deren Metalldampf das Laserlicht koppelt und die zum Aufschmelzen der Werkstücke 1, 2 in einen sehr engen Kanal 19 führt.

Das Lichtbündel 15, das das Lichtbündel 14 ringförmig umgibt, weist seinen Fokus 11 weiter in der Nähe der Oberfläche des Schweißbads 16 auf. Das Lichtbündel 15 koppelt mit der gleichen Dampfkapillare wie das Lichtbündel 14. Es wird ein zusätzlicher Energieeintrag in der Nähe der Oberfläche des Schweißbads bewirkt. Die hier zusätzlich eingetragene Wärmeenergie kann dazu genutzt werden, eine V-förmige Nahtform auch bei großen Materialdicken zu erzielen.

Solange die Lichtbündel 14, 15 auf die Werkstücke 1, 2 bzw. die Trennfuge 4 treffen, werden die Werkstücke und die Lichtbündel 14, 15 relativ zueinander in Schweißrichtung 21 (Figur 3) bewegt. Der Abstand der Fokusse 11, 12 bleibt dabei konstant. Das aus dem Einwirkungsbereich der Lichtbündel 14, 15 dadurch herausgeführte Schweißbad 16 erstarrt somit wieder und bildet die Schweißnaht 17. Aufgrund der zur Werkstückoberfläche hin divergenten Gestalt des Schweißbads 16 beginnt die Erstarrung zunächst an der Wurzel der sich ausbildenden Schweißnaht und schreitet zu der Werkstückoberfläche hin fort (in Figur 2 von unten nach oben). Die Erstarrungsfront erreicht die Werkstückoberfläche dabei erst dann wenn das tiefer gelegene Material bereits erstarrt ist. Der Einschluss von noch flüssigem, noch nicht erstarrten Materialbereichen, die später zu Lunker- oder Porenbildung führen könnten, wird somit vermieden. Außerdem kann das Schweißbad 16 insgesamt und insbesondere an seiner Oberfläche etwas breiter und/oder insgesamt größer gehalten werden als bei Arbeit mit lediglich einem fokussierten Lichtstrahl (z.B. Lichtbündel 14), so dass die Neigung zu Heißrissen vermindert ist.

Es ergibt sich insgesamt eine etwas verbreiterte Naht 17 mit einem Querschnittsprofil, das dem Querschnitt des Schweißbads 16 ähnelt.

Figur 1 veranschaulicht den ringförmigen Querschnitt des Lichtstrahls auf dem Lichtweg 8. Anstelle des geschlossenen Ringquerschnitts kann der Lichtstrahl auch durch Einzelsegmente oder, wie in Figur 1 zusätzlich veranschaulicht, durch eine ringförmige Folge 8a von Einzellichtstrahlen gebildet sein. Diese umgeben den Zentralstrahl konzentrisch und treffen in dem Fokus 11. Wesentlich ist bei dieser Ausführungsform wie auch bei der Ausführungsform mit geschlossenem Ringstrahl, dass die insgesamt definierte Strahlrichtung mit der des Zentralstrahls übereinstimmt. Die Strahlrichtung der Strahlen des äußeren Lichtwegs 8 ergibt sich dabei durch vektorielle Addition der Vektoren, die in jedem Punkt des Lichtwegs 8 mit ihrer Länge die lokale Lichtleistung und mit ihrer Richtung die Ausbreitungsrichtung beschreiben. Diese vektorielle Addition wird über die gesamte Querschnittsfläche des Lichtwegs 8 ausgeführt. Der sich ergebende Gesamtvektor sollte dabei möglichst parallel zur optischen Achse des Zentralstrahls ausgerichtet sein. Die Zusammensetzung des Ringstrahls durch mehrere Einzelstrahlen, die in dem Ring 8a gemäß Figur 1 angeordnet sind, eröffnet die Möglichkeit, den Ringstrahl von ein oder mehreren anderen Laserlichtquellen herzuleiten und beispielsweise über optische Fasern anzukoppeln.

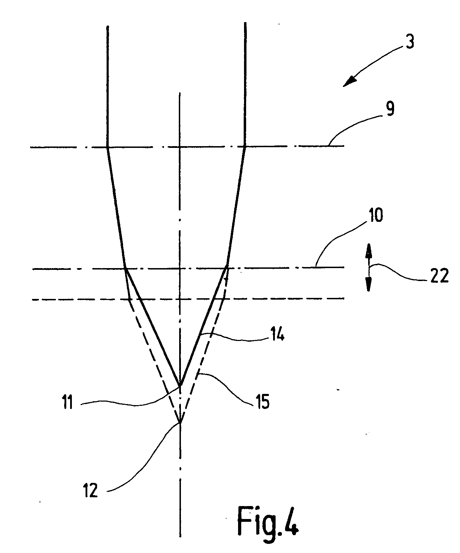

Figur 4 veranschaulicht schematisch eine Abwandlung der bisher beschriebenen Verfahren, die durchweg davon ausgehen, dass mit zeitlich konstant arbeitenden Lichtbündeln 14, 15 gearbeitet wird (Dauerstrich) . Bei der Laserscheißeinrichtung 3 nach Figur 4 ist eine der beiden Linsen 9, 10 in Richtung eines Pfeils 22 verschiebbar angeordnet. Der Linse 10 ist eine Verschiebeeinrichtung zugeordnet, die die Linse beispielsweise mit einer Frequenz von einigen Hertz bewegen kann (oszillieren). Es entstehen somit zwei Lichtbündel 14, 15, wobei das Lichtbündel 15 gestrichelt veranschaulicht ist. Beide weisen unterschiedliche Fokusse 11, 12 sowie unterschiedliche Konvergenzwinkel auf. Sie sind zeitlich einander abwechselnd vorhanden. Durch geeignete Wahl der Kurvenform der Bewegung der Linse 10 können die Zeiten, in denen die beiden Lichtbündel 14, 15 aktiv sind, gleich oder auch unterschiedlich bemessen sein (dies erfolgt durch Beeinflussung des Tastverhältnisses zwischen den beiden Endlagen der Bewegung der Linse 10). Auch mit einer solchen Anordnung lässt sich der Leistungseintrag in die Schweißnaht steuern und ein größerer Wärmeanteil oberflächennah konzentrieren, um ein nach oben hin divergentes V-förmiges Schweißbad zu erhalten. Es ist auch möglich, das Lichtbündel 15 seitlich oszillieren zu lassen.

Prinzipiell kann eine gezielte Gestaltung des Schweißbads 16 auch durch anderweitige einstellbare oder variierbare Optiken erhalten werden, wie auch durch Kombination von Laserstrahlen unterschiedlicher Wellenlänge, beispielsweise von unterschiedlichen Lasern herrührend.

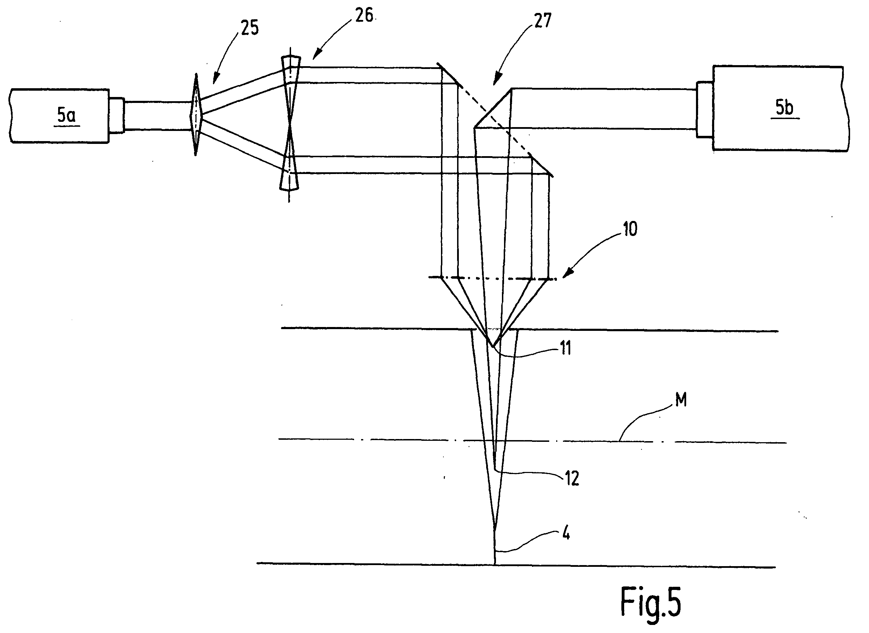

Figur 5 veranschaulicht die Erzeugung einer Schweißnaht mit zwei Lasern 5a, 5b, die auf eine Trennfuge 4 zur Erzeugung einer Laserschweißnaht gerichtet sind. Die Laser 5a, 5b sind beispielsweise CO₂-Laser und arbeiten im Dauerstrichbetrieb oder im Impulsbetrieb. Sie können gleiche oder auch unterschiedliche Leistungen aufweisen. Während der Laser 5a zur Erzeugung des Ringsstrahls dient ist der Laser 5b zur Erzeugung des Zentralstrahls vorgesehen. Der Lichtstrahl des Lasers 5a wird durch zwei Prismenelemente 25, 26 zu einem Ringstrahl umgeformt. Das Prismenelement 25 weist wenigstens eine Kegelfläche und gegenüber liegend eine Planfläche oder zwei einander gegenüber liegende Kegelflächen auf und ist konvex ausgebildet. Das Prismenelement 26 weist zwei einander gegenüber liegende Kegelflächen oder eine Kegelfläche und gegenüber liegend eine Planfläche auf, wobei es insgesamt konkav ausgebildet ist. Anstelle der Prismenelemente 25, 26 kann auch eine entsprechend ausgebildete Zonenlinse oder ein Zonenspiegel vorgesehen werden.

Die Spiegelanordnung 27 dient dazu, den Ringstrahl um den Zentral strahl herumzulegen. Auch kann sie den Zentralstrahl bereits fokussieren. Die Fokussierung des Ringstrahls erfolgt mit der Ringlinse 10, die als Zonenlinse oder Zonenspiegel ausgebildet sein kann. Die Spiegelanordnung 27 und der Ringspiegel 10, sowie ggf. (falls erforderlich) eine Linse 9 (entsprechend Figur 1) bilden ein Objektiv, das die Strahlen der Laser 5a, 5b zusammenführt und die beiden Fokusse 11, 12 in unterschiedlicher Tiefe erzeugt. Dabei ist der Fokus 11 vorzugsweise oberhalb einer Mittellinie M des zu schweißenden Materials angeordnet während der Fokus 12 vorzugsweise unterhalb derselben angeordnet ist. Die Schweißnaht wird komplett von einer Seite her erzeugt, d.h. die erzielbare Nahtdicke ist höher als bei Nutzung lediglich eines Fokusses.

Die in Figur 5 schematisch veranschaulichte Ausführungsform einer Laserschweißeinrichtung kann die Basis für besonders vielseitig einzusetzenden Laserschweißmaschinen bilden. Beispielsweise können die Laser 5a, 5b als CO₂-Laser mit 8 kW Leistung ausgebildet sein. Eine solche Laserschweißmaschine kann dann zum Schweißen dünnerer Teile eingesetzt werden, wenn lediglich einer der beiden Laser 5a, 5b betrieben wird. Dabei kann entweder der Fokus 11 oder der Fokus 12 zum Schweißen von Werkstücken genutzt werden und zwar je nach dem, ob eine größere oder eine kleinere Strahlkonvergenz gewünscht ist.

Es ist auch möglich, eine Verstellmöglichkeit für den Abstand der Fokusse 11, 12 zueinander vorzusehen, um beispielsweise beide Fokusse 11, 12 miteinander in Übereinstimmung zu bringen. Dies eröffnet einen weiteren Anwendungsfall. Außerdem kann die Laserschweißanlage unter Betrieb beider Laser 5a, 5b in der in Figur 5 veranschaulichten Weise mit oberen Fokus 11 und unterem Fokus 12 zum Schweißen von besonders dicken Werkstücken unter Ausbildung korrekt V-förmiger Nähte genutzt werden.

Eine solche Schweißmaschine kann auch unter Kombination unterschiedlicher Laser (unterschiedliche Leistungen und/oder unterschiedliche Wellenlängen) aufgebaut werden, wobei unabhängig von der Art der Laserlichterzeugung und der Art der Erzeugung der Fokusse 11, 12 solchen Laserschweißmaschinen gemeinsam ist, dass sie wenigstens zwei entlang einer optischen Achse voneinander beabstandete Fokusse 11, 12 ausbildet. Die optische Achse wird vorzugsweise senkrecht zur Oberfläche des Schweißguts, d.h. parallel zu miteinander zu verbindenden Schnittflächen bzw. Stoßflächen des Werkstücks geführt.

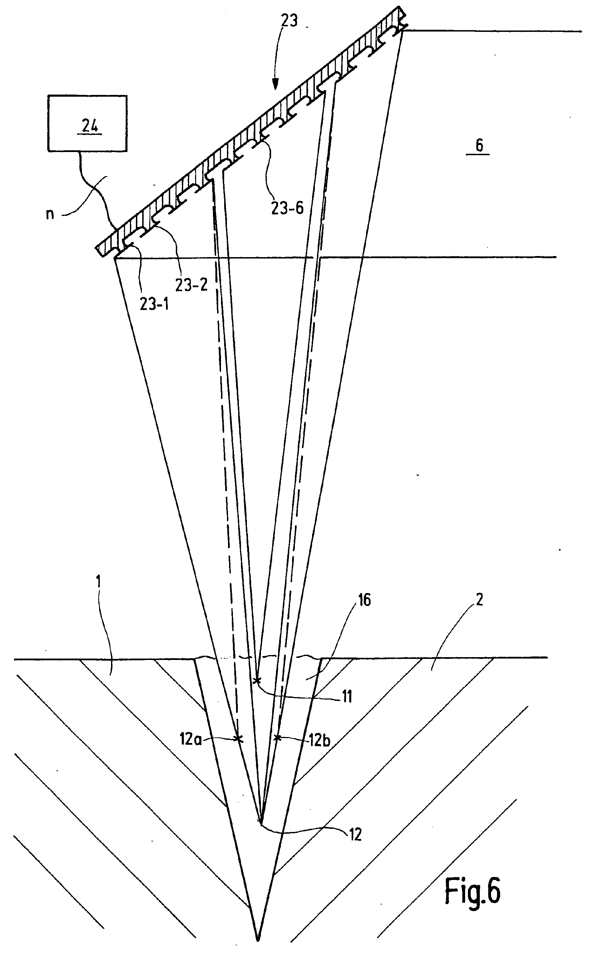

Eine weitere besonders flexible Variante ist in Figur 6 veranschaulicht. Hier wird das Lichtbündel 6 durch einen Spiegel 23 auf die Werkstücke 1, 2 reflektiert, der eine Vielzahl von Einzelelementen 23-i (i geht von 1 bis n, wobei n eine relativ große Zahl ist) aufweist. Die Einzelspiegel 23-i sind nach Art einer Matrix relativ lückenlos angeordnet. Der Spiegel 23 kann durch einen Siliziumchip gebildet werden, dessen Einzelspiegel 23-i über einen piezoelektrischen Effekt einzeln ansteuerbar sind. Eine Steuerschaltung 24, die an den Spiegel 23 angeschlossen oder Teil desselben ist, kann die einzelnen Spiegelelemente 23-i individuell ansteuern, um ein oder zweier Fokusse 11, 12 zu erzeugen. Es ist auch möglich, mehrere Brennpunkte 11, 12a, 12b zu erzeugen. Die Fokusse 11, 12a, 12b können jeweils punktförmig, linienförmig, z.B. ringförmig oder auch als Brennfleck, d.h. räumlich, ausgebildet sein. Damit ist die Gestaltung des Energieeintrags in das Schweißbad 16 in weiten Bereichen einstellbar, an die Schweißgeschwindigkeit, die Materialdicke, die Materialbeschaffenheit oder andere Gegebenheiten anpassbar. Die Fokusse 11, 12a, 12b können während des Schweißvorgangs statisch beibehalten werden oder auch langsam oder schnell bewegt werden. Die Bewegung kann der Schweißbewegung in Schweißrichtung überlagert werden, beispielsweise indem ein Fokus 12a oder 12b schnell hin- und herbewegt wird. Damit lässt sich eine Gestaltung des Energieeintrags so erreichen, dass besonders niedrige Wärmegradienten erzielt werden.

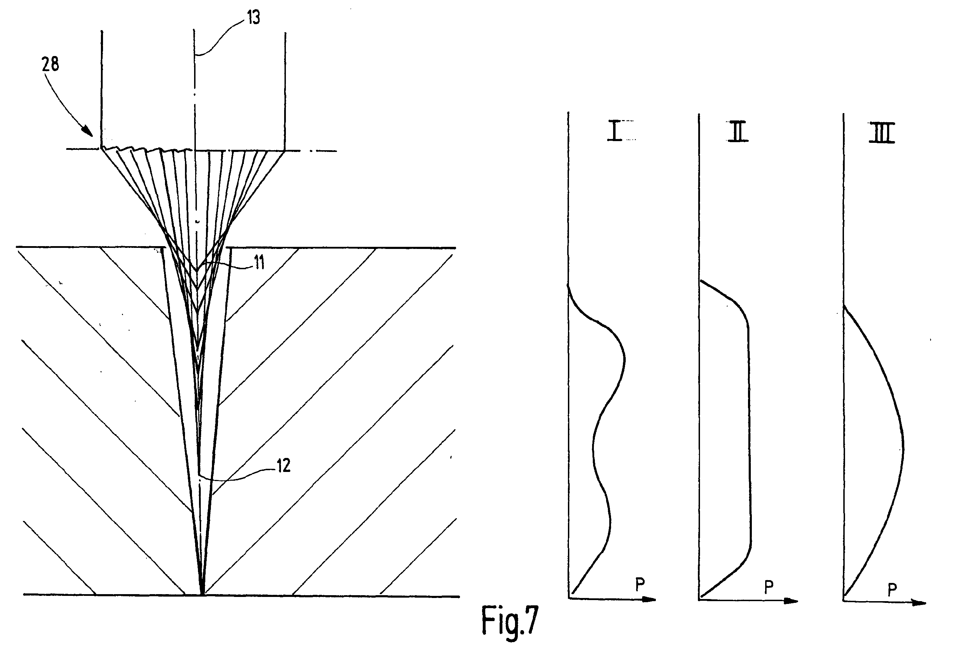

Eine weitere Ausführungsform einer Laserschweißeinrichtung zur Erzeugung mehrerer Fokusse in einer Schweißnaht ist in Figur 7 veranschaulicht. Ein Objektiv mit einer Zonenlinse 28 ist so ausgebildet, dass bei monochromatischem Licht eine besonders große Kaustik entsteht. Die achsenfernen Strahlen werden zu dem Fokus 11 hin abgelenkt während die achsennahen Strahlen zu dem Fokus 12 abgelenkt werden. Die dazwischen liegenden Strahlen können bei einer ersten nicht veranschaulichten Ausführungsform ebenfalls entweder zu dem Fokus 11 oder dem Fokus 12 abgelenkt werden. Die Zonenlinse 28 ist dann bifokal. In dem in Figur 7 veranschaulichten Fall werden ausgehend von den Randstrahlen, die radial weiter innen auf die Zonenlinse 28 treffenden Strahlen immer weniger abgelenkt, so dass beliebig viele und im Grenzfall unendlich viele Fokusse zwischen den Fokussen 11 und 12 entstehen. Dabei kann die Energieverteilung entlang der optischen Achse 13, wie durch die rechts stehenden Diagramme I, II, III angedeutet, auf verschiedene Weise gestaltet werden. Die Diagramme veranschaulichen die Leistungsdichte P entlang der optischen Achse 13. Das Diagramm I veranschaulicht eine Leistungsdichteverteilung mit zwei Maxima. Es können auch mehrere Maxima erzielt werden. Das Diagramm II veranschaulicht eine gleichmäßige Leistungsdichteverteilung während das Diagramm III eine Leistungsdichteverteilung mit einem einzigen Maximum veranschaulicht. Den erzielen Leistungsdichteverteilungen ist gemeinsam, dass die Laserstrahlen nicht auf einen Punkt sondern in einen Bereich fokussiert werden, der in Bezug auf die Materialdicke des zu schweißenden Materials nicht vernachlässigbar klein ist. Als Anhaltspunkt kann dienen, dass die Entfernung der beiden Fokusse 11, 12 voneinander und somit der Abstand der Enden des Fokusbereichs voneinander wenigstens so groß ist wie ein Viertel der Materialdicke, vorzugsweise wenigstens halb so groß. Die Enden der Fokusbereiche werden markiert durch das erste und das letzte sich auf der optischen Achse 13 noch kreuzende Strahleripaar, d.h. in Figur 7 durch den Fokus 11 und den Fokus 12.

Mit der Zonenlinse 28 nach Figur 7 oder jeder anderen optischen Einrichtung, die mehrere hintereinander auf einer optischen Achse 13 liegende Fokusse ausbilden kann, lässt sich eine schlanke, V-förmige Naht auch bei sehr dickem miteinander zu verschweißenden Teilen erzielen.

Bei einem Laserschweißverfahren wird mit einem Schweißkopf gearbeitet, der wenigstens zwei unterschiedliche Fokusse 11, 12 erzeugt. Die Fokusse liegen vorzugsweise beide auf der optischen Achse in unterschiedlichen Tiefen der Schweißnaht. Außerdem sind die Konvergenzwinkel vorzugsweise unterschiedlich. Es lassen sich V-förmige Nähte auch bei dicken Werkstücken mit guter Nahtqualität erzielen.

## Patentansprüche

1. Verfahren zum Laserschweißen, insbesondere zum Schweißen von Metallwerkstücken (1, 2),
wobei in der gleichen Schweißzone zur gemeinsamen Erzeugung einer Schweißnaht (17) in unterschiedlichen Tiefen wenigstens zwei Fokusse (11, 12) erzeugt werden.

2. Verfahren nach Anspruch 1, **dadurch gekennzeichnet, dass** die Fokusse (11, 12) punktartig sind.

3. Verfahren nach Anspruch 1, **dadurch gekennzeichnet, dass** die Fokusse (11, 12) linienhaft sind.

4. Verfahren nach Anspruch 1, **dadurch gekennzeichnet, dass** die Fokusse (11, 12) auf einer gemeinsamen Brennlinie liegen.

5. Verfahren nach Anspruch 1, **dadurch gekennzeichnet, dass** die Fokusse (11, 12) mit Lichtbündeln (14, 15) erzeugt werden, die gleichzeitig aktiv sind.

6. Verfahren nach Anspruch 1, **dadurch gekennzeichnet, dass** die Fokusse (11, 12) mit Lichtbündeln (14, 15) erzeugt werden, die zeitlich versetzt, vorzugsweise einander abwechselnd aktiv sind.

7. Verfahren nach Anspruch 1, **dadurch gekennzeichnet, dass** der Fokus (12) von einem Lichtbündel (14) mit Scheibenquerschnitt und der Fokus (11) von einem Lichtbündel (15) mit Ringquerschnitt erzeugt wird.

8. Verfahren nach Anspruch 1, **dadurch gekennzeichnet, dass** die Fokusse (11, 12) mit Lichtbündeln (14, 15) erzeugt werden, die an den Fokussen (11, 12) unterschiedliche Konvergenzwinkel (α, β) aufweisen.

9. Verfahren nach Anspruch 1, **dadurch gekennzeichnet, dass** beide Fokusse (11, 12) mit Lichtbündeln (14, 15) erzeugt werden, die mit gleicher, vorzugsweise senkrechter Inzidenz auf das Werkstück gerichtet sind.

10. Verfahren nach Anspruch 1, **dadurch gekennzeichnet, dass** die Fokusse (11, 12) auf einer gemeinsamen optischen Achse (13) liegen.

11. Verfahren nach Anspruch 1, **dadurch gekennzeichnet, dass** die Fokusse (11, 12) bezüglich einer Schweißrichtung (21) nebeneinander, hintereinander oder schräg versetzt geführt werden.

12. Verfahren nach Anspruch 1, **dadurch gekennzeichnet, dass** die Fokusse (11, 12) zueinander in festem Abstand geführt werden.

13. Verfahren nach Anspruch 1, **dadurch gekennzeichnet, dass** die Fokusse (11, 12) in Bezug aufeinander bewegt werden.

14. Verfahren nach Anspruch 1, **dadurch gekennzeichnet, dass** die Fokusse (11, 12) mit Lichtbündeln (14, 15) erzeugt werden, deren Licht unterschiedliche Strahleigenschaften aufweist.

15. Verfahren nach Anspruch 1, **dadurch gekennzeichnet, dass** die Fokusse (11, 12) mit Lichtbündeln (14, 15) erzeugt werden, deren Licht unterschiedliche Wellenlängen aufweist.

16. Schweißeinrichtung zur Durchführung des Verfahrens nach Anspruch 1, mit einer ersten Fokussiereinrichtung (9, 10), die an einem Werkstück (1, 2) einen ersten Fokus (11) und einen zweiten Fokus (12) erzeugt,
wobei der Abstand der Fokusse (11, 12) voneinander derart gering ist, dass sie auf ein gemeinsames sich ausbildendes Schweißbad (16) zur Erzeugung einer gemeinsamen Naht (17) einwirken und
wobei die Fokusse (11, 12) in unterschiedlichen Tiefen ausgebildet werden.

17. Schweißeinrichtung nach Anspruch 16, **dadurch gekennzeichnet, dass** zwei Laserlichtquellen (5a, 5b) vorgesehen sind, denen eine gemeinsame Fokussiereinrichtung (9, 10) zur Erzeugung der beiden Fokusse (11, 12) zugeordnet ist.

18. Schweißeinrichtung nach Anspruch 17, **dadurch gekennzeichnet, dass** die Laserlichtquellen (5a, 5b) gleiche Wellenlängen aufweisen.

19. Schweißeinrichtung nach Anspruch 17, **dadurch gekennzeichnet, dass** die Laserlichtquellen (5a, 5b) unterschiedliche Wellenlängen aufweisen.

20. Schweißeinrichtung nach Anspruch 16, **dadurch gekennzeichnet, dass** die Fokussiereinrichtungen (9, 10) unterschiedliche Brennweiten aufweisen.

21. Schweißeinrichtung nach Anspruch 16, **dadurch gekennzeichnet, dass** die Fokussiereinrichtungen (9, 10) in einem gemeinsamen Laserkopf untergebracht sind.

22. Schweißeinrichtung nach Anspruch 16, **dadurch gekennzeichnet, dass** der Tiefenabstand der Fokusse (11, 12) einstellbar ist.

23. Schweißeinrichtung nach Anspruch 16, **dadurch gekennzeichnet, dass** einer der Fokusse (11) oberflächennah und der andere Fokus (12) rückseitennah angeordnet ist.

24. Schweißeinrichtung nach Anspruch 16, **dadurch gekennzeichnet, dass** die Fokussiereinrichtungen fokussierende Elemente (9, 10) aufweisen, die in Bezug aufeinander ruhend angeordnet sind.
